(19) Europäisches Patentamt
European Patent Office
Office européen des brevets

(11) EP 4 349 901 B1

(12) **EUROPEAN PATENT SPECIFICATION**

(45) Date of publication and mention of the grant of the patent:
**08.04.2026 Bulletin 2026/15**

(21) Application number: **21944242.3**

(22) Date of filing: **01.12.2021**

(51) International Patent Classification (IPC):
***C08L 7/00*** *(2006.01)* ***B60C 1/00*** *(2006.01)*
***C08J 5/04*** *(2006.01)* ***C08J 9/04*** *(2006.01)*
***C08K 3/04*** *(2006.01)* ***C08K 3/36*** *(2006.01)*
***C08K 5/053*** *(2006.01)* ***C08K 5/1535*** *(2006.01)*
***C08K 5/1545*** *(2006.01)* ***C08K 7/02*** *(2006.01)*
***C08L 9/00*** *(2006.01)* ***C08L 9/06*** *(2006.01)*
***C08L 15/00*** *(2006.01)*

(52) Cooperative Patent Classification (CPC):
(C-Sets available)
**C08J 9/0023; B60C 1/0016; C08L 7/00;**
B60C 2200/06; C08J 9/0061; C08J 9/0066;
C08J 9/0085; C08J 9/0095; C08J 9/107;
C08J 2203/04; C08J 2307/00; C08J 2309/06;
C08J 2407/00; C08J 2409/00; C08J 2409/06;
(Cont.)

(86) International application number:
**PCT/JP2021/044164**

(87) International publication number:
**WO 2022/254750 (08.12.2022 Gazette 2022/49)**

(54) **RUBBER COMPOSITION AND TIRE**

KAUTSCHUKZUSAMMENSETZUNG UND REIFEN

COMPOSITION DE CAOUTCHOUC, ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2021 JP 2021091901**
**01.11.2021 JP 2021179024**

(43) Date of publication of application:
**10.04.2024 Bulletin 2024/15**

(73) Proprietor: **BRIDGESTONE CORPORATION**
**Chuo-ku**
**Tokyo 104-8340 (JP)**

(72) Inventor: **OGIWARA, Akiko**
**Tokyo 104-8340 (JP)**

(74) Representative: **Marks & Clerk LLP**
**15 Fetter Lane**
**London EC4A 1BW (GB)**

(56) References cited:
**EP-A1- 3 456 772**
**EP-A1- 3 495 162**
**WO-A1-2019/216109**
**WO-A1-2019/216110**
**WO-A1-2020/100627**
**WO-A1-2020/100628**
**JP-A- 2010 215 854**
**JP-A- 2011 184 634**
**JP-A- 2017 002 152**
**JP-A- 2017 203 118**
**JP-A- 2019 001 845**
**JP-A- 2020 019 862**
**JP-A- H09 194 640**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
Y02T 10/86

C-Sets
**C08L 7/00, C08L 9/00, C08K 5/053;**
**C08L 7/00, C08L 9/00, C08K 5/053, C08K 3/30;**
**C08L 7/00, C08L 9/00, C08K 5/053, C08K 7/02;**
**C08L 7/00, C08L 9/00, C08K 5/053, C08K 7/22;**
**C08L 7/00, C08L 15/00, C08K 5/053**

## Description

TECHNICAL FIELD

This disclosure relates to a rubber composition and a tire.

BACKGROUND

In recent years, pneumatic tires using foam rubber in a tread portion are manufactured and sold in the field of pneumatic tires, and these pneumatic tires are applied to studless tires that specialize in on-ice performance. Further, to reduce the fuel consumption of automobiles and the like, there has been a demand for weight reduction of members using rubber compositions such as tires.

JP 2014-172379 A (PTL 1) describes a technique of providing a tire with excellent steering stability and wear resistance by using a specific tire vulcanizing mold.

However, the technique described in PTL 1 cannot provide sufficient wear resistance, cut resistance, and other properties under severe conditions, and further improvement has been desired considering its application to rubber articles such as tires.

PTL 2 relates to a rubber composition comprising: a cyclic polyol compound having a hydrocarbyl group and a hydroxy group and having two or more and ten or less cyclic structures; carbon black; and a rubber component.

PTL 3 relates to a pneumatic tire.

CITATION LIST

Patent Literature

PTL 1: JP 2014-172379 A
PTL 2: EP 3 456 772 A1
PTL 3: EP 3 495 162 A1

SUMMARY

(Technical Problem)

It could thus be helpful to provide a vulcanized rubber composition having good on-ice performance and excellent wear resistance. It could also be helpful to provide a tire with excellent on-ice performance and wear resistance.

(Solution to Problem)

We have conducted intensive studies in improving on-ice performance and wear resistance. We found that, by containing a liquid polymer having a predetermined weight-average molecular weight, it is possible to enhance the on-ice performance, and by containing a small amount of a cyclic polyol compound having a hydrocarbyl group in a rubber composition containing natural rubber as a rubber component, it is possible to enhance the strength of rubber, thereby improving the wear resistance.

That is, the rubber composition of the present disclosure contains a rubber component containing natural rubber, a cyclic polyol compound having a hydrocarbyl group, and a liquid polymer having a polystyrene-equivalent weight-average molecular weight of 5000 or more and less than 40000 measured by gel permeation chromatography, wherein a content of the cyclic polyol compound having a hydrocarbyl group is 0.1 parts by mass to 5 parts by mass with respect to 100 parts by mass of the natural rubber, and wherein a content of the liquid polymer is 1 part by mass to 40 parts by mass with respect to 100 parts by mass of the rubber component.

With this structure, it is possible to realize excellent wear resistance while having good on-ice performance.

The tire of the present disclosure uses the above-described rubber composition in a tread portion.

With this structure, it is possible to realize excellent on-ice performance and wear resistance.

(Advantageous Effect)

According to the present disclosure, it is possible to provide a rubber composition with excellent on-ice

performance and wear resistance.
Further, according to the present disclosure, it is possible to provide a tire with excellent on-ice performance and wear resistance.

## DETAILED DESCRIPTION

The following describes embodiments of the present disclosure in detail.

<Rubber composition>

The rubber composition of the present disclosure is a rubber composition containing a rubber component containing natural rubber, a cyclic polyol compound having a hydrocarbyl group, and a liquid polymer having a polystyrene-equivalent weight-average molecular weight of 5000 or more and less than 40000 measured by gel permeation chromatography.

(Rubber component)

The rubber component contained in the rubber composition of the present disclosure contains at least natural rubber (NR). By containing natural rubber in the rubber component, it is possible to obtain excellent cut resistance, reinforcing properties, wear resistance, and other properties when it is used together with a cyclic polyol compound having a hydrocarbyl group, which will be described later.
The content of the natural rubber in the rubber component is not particularly limited. For example, from the viewpoint of further improving the wear resistance, the content of the natural rubber is preferably 30 % by mass or more of the rubber component. In this case, the cut resistance and the wear resistance can be more reliably improved when it is used together with a cyclic polyol compound having a hydrocarbyl group, which will be described later. From the same point of view, the content of the natural rubber in the rubber component is preferably 35 % by mass or more and more preferably 40 % by mass or more. The upper limit is preferably 100 % by mass or less, more preferably 90 % by mass or less, and still more preferably 80 % by mass or less.
The rubber component may contain any synthetic rubber in addition to the natural rubber.
For example, the rubber component preferably contains a diene-based synthetic rubber from the viewpoint of obtaining excellent cut resistance and wear resistance.
Examples of the diene-based synthetic rubber include synthetic polyisoprene (IR), styrene-butadiene copolymer rubber (SBR), and polybutadiene rubber (BR). The diene-based synthetic rubber may be contained alone or in combination of two or more in the rubber component. The rubber component may contain a non-diene-based synthetic rubber depending on the required performance.
The rubber component preferably further contains a conjugated diene-based polymer having a functional group. When the rubber component contains a conjugated diene-based polymer having a functional group, the dispersibility of a filler, which will be described later, can be improved, thereby realizing better wear resistance and on-ice performance.
The functional group of the conjugated diene-based polymer having a functional group is not particularly limited, and it may be appropriately selected according to the type of filler and the required performance. Examples of the functional group include functional groups having at least one element selected from nitrogen, silicon, oxygen, and tin.
Examples of the functional group include an amino group, an imino group, an amide group, an isocyanate group, a silyl group, an alkoxy group, an alkoxysilyl group, an epoxy group, a glycidyl group, and a carbonyl group.
A method of introducing a specific functional group into the conjugated diene-based polymer is not particularly limited, and the functional group may be introduced with a known method according to the required performance.

(Cyclic polyol compound having hydrocarbyl group)

The rubber composition of the present disclosure further contains a cyclic polyol compound having a hydrocarbyl group in addition to the rubber component described above.
The cyclic polyol compound having a hydrocarbyl group contained in the rubber composition can greatly improve the wear resistance and the cut resistance of the rubber composition. Further, it enhances the interaction between the rubber molecules of the rubber component and an agent to be described later, so that the physical properties of the rubber after cross-linking can be homogenized. As a result, the reinforcing properties can be improved.
Further, the cyclic polyol compound having a hydrocarbyl group has fewer hydrophilic sites than a compound such as sorbitol, which can suppress self-aggregation in the rubber composition. As a result, the elongation fatigue resistance of the vulcanized rubber composition can be maintained satisfactorily.
The content of the cyclic polyol compound having a hydrocarbyl group is 0.1 parts by mass to 5 parts by mass with

respect to 100 parts by mass of the natural rubber. When the content of the cyclic polyol compound having a hydrocarbyl group is 0.1 parts by mass or more with respect to 100 parts by mass of the natural rubber, the wear resistance can be sufficiently improved. On the other hand, when the content of the cyclic polyol compound having a hydrocarbyl group is 5 parts by mass or less with respect to 100 parts by mass of the natural rubber, self-aggregation in the rubber composition can be reliably suppressed, and the elongation fatigue resistance can be further improved.

From the same point of view, the content of the cyclic polyol compound having a hydrocarbyl group is more preferably 0.1 parts by mass to 3 parts by mass and still more preferably 0.3 parts by mass to 2.5 parts by mass with respect to 100 parts by mass of the natural rubber.

From the viewpoint of improving the wear resistance and the cut resistance, the cyclic polyol compound having a hydrocarbyl group is preferably dispersed in the rubber component, and it is more preferably dispersed in the natural rubber.

The cyclic polyol compound having a hydrocarbyl group does not act as a surfactant for other compounding agents, but is dispersed in rubber to improve the wear resistance and the cut resistance. Therefore, it is distinguished from a surfactant.

The cyclic polyol compound having a hydrocarbyl group preferably has two or more hydroxyl groups, and it preferably has three or more hydroxyl groups. This is because, by having many hydroxyl groups, the interaction between the rubber component and additives is more strongly exhibited, thereby realizing better wear resistance and cut resistance. On the other hand, from the viewpoint of suppressing self-aggregation in rubber due to a large number of hydrophilic sites, it is preferable to have five or less hydroxyl groups and more preferable to have four or less hydroxyl groups.

The cyclic polyol compound having a hydrocarbyl group is preferably a cyclic polyol compound having a hydrocarbyl ester group. In this case, better wear resistance and cut resistance can be realized.

From the viewpoint of realizing better wear resistance and cut resistance, the cyclic polyol compound having a hydrocarbyl group is more preferably a compound represented by the following formula (1).

[Chem. 1]

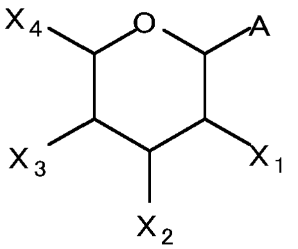

・・・(1)

In the above formula (1), A is a hydrocarbyl ester group having 6 to 30 carbon atoms or a hydrocarbyl ether group having 6 to 30 carbon atoms, and the number of carbon atoms of the hydrocarbyl group indicated by A is preferably 12 to 24. When the number of carbon atoms of the hydrocarbyl group indicated by A in the formula (1) is in a range of 12 to 24, the wear resistance and the cut resistance are further improved while maintaining good elongation fatigue resistance.

For A in the formula (1), the first atom from the ring portion (that is, the atom bonded to the ring) or the second atom from the ring portion is preferably an oxygen atom. Examples of A in which the first atom from the ring portion is an oxygen atom include groups represented by -O-A' and -O-CO-A", and examples of A in which the second atom from the ring portion is an oxygen atom include groups represented by $-CH_2$-O-A" and $-CH_2$-O-CO-A‴, where A' is preferably a hydrocarbyl group having 6 to 30 carbon atoms, A" is preferably a hydrocarbyl group having 5 to 29 carbon atoms, A‴ is preferably a hydrocarbyl group having 4 to 28 carbon atoms, and A', A" and A‴ are more preferably hydrocarbyl groups having 12 to 24 carbon atoms.

In the formula (1), $X_1$, $X_2$, $X_3$ and $X_4$ are each independently -OH or - R (where -R is -H or $-CH_2OH$), provided that at least two of $X_1$, $X_2$, $X_3$ and $X_4$ are -OH. When two or more of $X_1$, $X_2$, $X_3$ and $X_4$, or preferably three or more of $X_1$, $X_2$, $X_3$ and $X_4$ are -OH, the wear resistance and the cut resistance of the rubber composition are further improved.

Among the compounds represented by the above formula (1), a compound represented by the following formula (2) or formula (3) is more preferable, and a compound represented by the formula (2) is particularly preferable.

[Chem. 2]

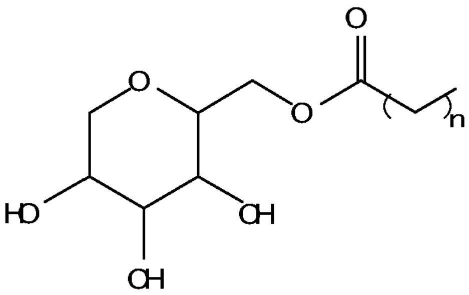

・・・(2)

[Chem. 3]

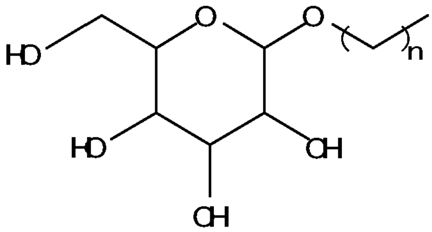

・・・(3)

In the formulas (2) and (3), n is a natural number, which is preferably in a range of 11 to 23.

By blending the compound represented by the formula (2) or formula (3) as the modified cyclic polyol compound, the wear resistance can be further improved.

The cyclic polyol compound having a hydrocarbyl group is not particularly limited. For example, it can be obtained by reacting a polyol compound, such as sorbitol, sorbitan, glucose and fructose, with an aliphatic alcohol, such as octanol, decanol, dodecanol, tetradecanol and hexadecanol, or an aliphatic carboxylic acid, such as lauric acid, myristic acid, palmitic acid, stearic acid and oleic acid.

Specific examples of the cyclic polyol compound having a hydrocarbyl group include ester compounds such as sorbitan monolaurate, sorbitan monomyristate, sorbitan monopalmitate, sorbitan monostearate and sorbitan monooleate, and ether compounds such as octyl-β-D-glucopyranoside, decyl-β-D-glucopyranoside, dodecyl-β-D-glucopyranoside, tetradecyl-β-D-glucopyranoside and hexadecyl-β-D-glucopyranoside. These compounds may be used alone or in combination of two or more.

From the viewpoint of realizing both elongation fatigue resistance and cut resistance at a higher level, the cyclic polyol compound having a hydrocarbyl group is preferably sorbitan monostearate (sorbitan monoester) among these compounds.

The melting point of the cyclic polyol compound having a hydrocarbyl group is preferably 40 °C to 100 °C and more preferably 45 °C to 90 °C. This is because, when the melting point of the cyclic polyol compound having a hydrocarbyl group is 100 °C or lower, the solubility during kneading and vulcanization reaction can be improved, and when the melting point is 40 °C or higher, the durability at high temperatures can be improved.

(Liquid polymer)

In addition to the rubber component and the cyclic polyol compound described above, the rubber composition of the present disclosure further contains a liquid polymer having a polystyrene-equivalent weight-average molecular weight of 5000 or more and less than 40000 measured by gel permeation chromatography.

By containing the liquid polymer, the flexibility of the rubber composition as a whole can be ensured. Further, when it is used together with the cyclic polyol compound described above or the filler described later, both on-ice performance and wear resistance can be achieved at a high level.

The liquid polymer is not particularly limited if it is a polymer having a polystyrene-equivalent weight-average molecular weight of 5000 or more and less than 40000 measured by gel permeation chromatography. However, it is preferably an unmodified conjugated diene-based polymer where the bound styrene content is less than 10 % and the vinyl bond content of the conjugated diene compound portion is 20 % or more. The liquid polymer tends to be unevenly distributed in the natural rubber phase of the rubber component, and better on-ice performance can be obtained.

From the viewpoint of obtaining better on-ice performance, the vinyl bond content of the conjugated diene compound portion of the liquid polymer is preferably 30 % or more, more preferably 40 % or more, and still more preferably 45 % or more. Further, from the viewpoint of suppressing increase in rubber hardness, the vinyl bond content of the conjugated diene compound portion of the liquid polymer is preferably 70 % or less, more preferably 65 % or less, and still

more preferably 55 % or less.

The content of the liquid polymer is 1 part by mass to 40 parts by mass with respect to 100 parts by mass of the rubber component. In this case, it is possible to provide flexibility in the rubber composition, to improve the on-ice performance of a vulcanized rubber obtained using the rubber composition and the on-ice performance of a tire provided with a tread portion obtained using the rubber composition, and to suppress the deterioration in wear resistance.

From the same point of view, the content of the liquid polymer is more preferably 3 parts by mass to 30 parts by mass, still more preferably 5 parts by mass to 25 parts by mass, and particularly preferably 7 parts by mass to 20 parts by mass with respect to 100 parts by mass of the rubber component.

Even if the rubber composition is vulcanized, the liquid polymer has a low molecular weight because it does not form a cross-linked structure with a rubber component (A), and specifically, the liquid polymer has a polystyrene-equivalent weight-average molecular weight (hereinafter sometimes simply referred to as weight-average molecular weight) of 5000 or more and less than 40000 measured by gel permeation chromatography.

When the weight-average molecular weight of the liquid polymer is less than 5000, there is a possibility that a vulcanized rubber and a tread portion of a tire obtained using the rubber composition becomes excessively flexible, which deteriorates the wear resistance. When the weight-average molecular weight of the liquid polymer is 40000 or more, the flexibility may be lost, which deteriorates the on-ice performance of a vulcanized rubber obtained using the rubber composition and the on-ice performance of a tire provided with a tread portion obtained using the rubber composition.

From the same point of view, the weight-average molecular weight of the liquid polymer is preferably 5500 to 30000, more preferably 6000 to 25000, and still more preferably 6500 to 20000.

The liquid polymer is preferably an unmodified conjugated diene-based polymer in which the bound styrene content in the conjugated diene compound portion is less than 10 %. When the bound styrene content of the conjugated diene compound portion is less than 10 %, the flexibility of the rubber composition can be sufficiently ensured, and the on-ice performance of a vulcanized rubber obtained using the rubber composition and the on-ice performance of a tire provided with a tread portion obtained using the rubber composition can be further improved.

From the same point of view, the liquid polymer preferably has a bound styrene content in the conjugated diene compound portion of 5 % or less, more preferably 3 % or less, and particularly preferably 0 %.

The reason why the liquid polymer is preferably an unmodified polymer is that it is less likely to interact with the filler described later, suppresses inclusion of the filler in the natural rubber phase, and maintains good on-ice performance.

The conjugated diene-based polymer is not particularly limited if it has a specific weight-average molecular weight, a bound styrene content in the conjugated diene compound portion below a certain value, and a specific vinyl bond content. However, it is preferably a homopolymer of a conjugated diene compound, or a copolymer of an aromatic vinyl compound and a conjugated diene compound.

Examples of the conjugated diene compound as a monomer include 1,3-butadiene, isoprene, 1,3-pentadiene, 2,3-dimethylbutadiene, 2-phenyl-1,3-butadiene, and 1,3-hexadiene, among which 1,3-butadiene and isoprene are preferable. On the other hand, examples of the aromatic vinyl compound as a monomer include styrene, p-methylstyrene, m-methylstyrene, p-tert-butylstyrene, $\alpha$-methylstyrene, chloromethylstyrene, and vinyltoluene.

The liquid polymer is preferably either or both of polybutadiene and polyisoprene, and it is more preferably polybutadiene. These monomers may be used alone or in combination of two or more.

When the liquid polymer is an aromatic vinyl compound-conjugated diene compound copolymer, the bonding amount of the aromatic vinyl compound is preferably less than 5 % by mass. By setting the bonding amount of the aromatic vinyl compound to less than 5 % by mass, the hardness of the rubber increases, and deterioration of the on-ice performance can be suppressed.

A method of producing the conjugated diene-based polymer as the liquid polymer is not particularly limited. For example, it can be obtained by polymerizing a conjugated diene compound as a monomer alone, or a mixture of an aromatic vinyl compound and a conjugated diene compound as monomer in a hydrocarbon solvent inert to the polymerization reaction.

A polymerization initiator used for synthesizing the conjugated diene-based polymer is preferably a lithium compound and more preferably n-butyl lithium. When a lithium compound is used as the polymerization initiator, the aromatic vinyl compound and the conjugated diene compound are polymerized by anionic polymerization.

As described above, a method of producing the conjugated diene-based polymer using a polymerization initiator is not particularly limited. For example, the conjugated diene-based polymer can be produced by polymerizing monomers in a hydrocarbon solvent inert to the polymerization reaction.

Examples of the hydrocarbon solvent inert to the polymerization reaction include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used alone or in combination of two or more.

The polymerization reaction may be carried out in the presence of a randomizer.

The randomizer can control the microstructure of the conjugated diene compound portion of the (co)polymer.

More specifically, it has effects such as controlling the vinyl bond content in the conjugated diene compound portion of the (co)polymer and randomizing the conjugated diene compound units and the aromatic vinyl compound units in the copolymer.

Examples of the randomizer include dimethoxybenzene, tetrahydrofuran, dimethoxyethane, diethylene glycol dibutyl ether, diethylene glycol dimethyl ether, ditetrahydrofurylpropane, triethylamine, pyridine, N-methylmorpholine, N,N,N',N'-tetramethylethylenediamine, 1,2-dipiperidinoethane, potassium-t-amylate, potassium-t-butoxide, and sodium-t-amylate. The amount of these randomizers to be used is preferably in a range of 0.1 molar equivalents to 100 molar equivalents with respect to 1 mole of the polymerization initiator.

The anionic polymerization is preferably carried out by solution polymerization, and the concentration of the monomer in the polymerization reaction solution is preferably in a range of 5 % by mass to 50 % by mass and more preferably in a range of 10 % by mass to 30 % by mass. When the conjugated diene compound and the aromatic vinyl compound are used in combination, the content ratio of the aromatic vinyl compound in the monomer mixture can be appropriately selected according to the amount of the aromatic vinyl compound in the desired copolymer. The polymerization system is not particularly limited, and it may be a batch system or a continuous system.

The polymerization temperature of the anionic polymerization is preferably in a range of 0 °C to 150 °C and more preferably in a range of 20 °C to 130 °C. Although the polymerization may be carried out under a generated pressure, typically, the polymerization is preferably carried out under a pressure sufficient to substantially maintain the used monomers in a liquid phase. When the polymerization reaction is carried out under a pressure higher than the generated pressure, the reaction system is preferably pressured with an inert gas. Further, reaction inhibiting substances such as water, oxygen, carbon dioxide and a protonic compound are preferably preliminarily removed from raw materials used for the polymerization such as the monomer, the polymerization initiator, and the solvent.

The weight-average molecular weight of the liquid polymer, the bound styrene content of the conjugated diene compound portion, and the vinyl bond content of the conjugated diene compound portion can be adjusted by the amount of the monomer used for polymerization, the degree of polymerization, and the like. Further, the bound styrene content of the conjugated diene compound portion of the liquid polymer and the vinyl bond content of the conjugated diene compound portion (sometimes referred to as the microstructure of the liquid polymer) can be determined with an infrared method (Morello method).

(Filler)

In addition to the rubber component, the cyclic polyol compound, and the liquid polymer described above, the rubber composition of the present disclosure preferably further contains a filler containing at least one selected from the group consisting of silica and carbon black.

By containing a filler containing at least one selected from the group consisting of silica and carbon black together with the rubber component, the properties of the rubber composition, such as wear resistance and on-ice performance, can be further improved.

Examples of the type of the silica include wet silica (hydrous silicic acid), dry silica (anhydrous silicic acid), calcium silicate, and aluminum silicate, among which wet silica is preferred. These silicas may be used alone or in combination of two or more.

The wet silica may be precipitated silica. The precipitated silica is silica obtained by aggregating primary particles by, at an initial stage of production, advancing the reaction of a reaction solution in a relatively high temperature and neutral to alkaline pH range to grow silica primary particles and then controlling them to acidic pH range.

The silica is not particularly limited, where, for example, the CTAB specific surface area (cetyltrimethylammonium bromide adsorption specific surface area) may be 70 $m^2/g$ or more and 250 $m^2/g$ or less. The CTAB specific surface area refers to a value measured according to ASTM D3765-92. The CTAB specific surface area is obtained by assuming an adsorption cross sectional area of one molecule of cetyltrimethylammonium bromide (CTAB) on a silica surface to be 0.35 $nm^2$ and calculating a specific surface area ($m^2/g$) based on an adsorbed amount of CTAB.

The BET specific surface area of the silica may be 100 $m^2/g$ or more and 250 $m^2/g$ or less. The BET specific surface area refers to a specific surface area determined with the BET method, and it can be measured according to ASTM D4820-93 in the present disclosure.

The content of the silica is preferably 5 parts by mass to 100 parts by mass, more preferably 10 parts by mass to 50 parts by mass, and still more preferably 10 parts by mass to 45 parts by mass with respect to 100 parts by mass of the rubber component. When the content of the silica is 5 parts by mass or more with respect to 100 parts by mass of the rubber component, the wear resistance and the on-ice performance of the vulcanized rubber composition can be further improved. When the content is 100 parts by mass or less with respect to 100 parts by mass of the rubber component, the deterioration of processability and low rolling resistance of the rubber composition can be suppressed.

The carbon black is not particularly limited, and examples thereof include GPF, FEF, HAF, N339, IISAF, ISAF, and SAF grade carbon black. Carbon black with a nitrogen adsorption specific surface area ($N_2SA$, measured according to JIS

K 6217-2:2001) of 20 $m^2/g$ to 250 $m^2/g$ can be used. Among these, ISAF and SAF grade carbon black is preferred from the viewpoint of improving the wear resistance of the rubber composition. These carbon black products may be used alone or in combination of two or more.

It is possible to use carbon black with a nitrogen adsorption specific surface area ($N_2SA$, measured according to JIS K 6217-2:2001) of 20 $m^2/g$ to 250 $m^2/g$, or carbon black with a nitrogen adsorption specific surface area of 30 $m^2/g$ to 200 $m^2/g$, or carbon black with a nitrogen adsorption specific surface area of 30 $m^2/g$ to 150 $m^2/g$ as the carbon black.

Further, it is possible to use carbon black with a dibutyl phthalate (DBP) oil absorption (measured with the method described in JIS K 6217-4: 2001 "Determination of DBP absorption") of 50 $cm^3/100$ g to 200 $cm^3/100$ g, or carbon black with a DBP oil absorption of 60 $cm^3/100$ g to 150 $cm^3/100$ g as the carbon black.

The content of the carbon black is not particularly limited. It is preferably 5 parts by mass to 100 parts by mass, more preferably 20 parts by mass to 80 parts by mass, still more preferably 25 parts by mass to 70 parts by mass, and particularly preferably 30 parts by mass to 65 parts by mass with respect to 100 parts by mass of the rubber component. When the content of the carbon black is 5 parts by mass or more with respect to 100 parts by mass of the rubber component, the wear resistance can be further improved. When the content of the carbon black is less than 50 parts by mass with respect to 100 parts by mass of the rubber component, deterioration of the low heat generating properties can be suppressed more reliably.

The content of the carbon black is not particularly limited, but the content of the carbon black with respect to the content of the silica (content of carbon black/content of silica) is preferably 0.1 to 15, more preferably 0.5 to 1.5, and still more preferably 0.7 to 1.2 in terms of mass ratio. As other preferable examples, it is preferably 4 to 15 and more preferably 7 to 13.

When the content of the carbon black with respect to the content of the silica is 0.1 or more in mass ratio, it is possible to obtain better wear resistance and reinforcing properties. When the content of the carbon black with respect to the content of the silica is 15 or less in mass ratio, it is possible to obtain better cut resistance without deteriorating low heat generating properties.

In addition to the above-described silica and carbon black, the filler may also contain an inorganic compound represented by the following general formula (XX),

$$nM \cdot xSiO_y \cdot zH_2O \qquad (XX)$$

(where M is at least one selected from metal selected from the group consisting of aluminum, magnesium, titanium, calcium and zirconium, oxides or hydroxides of these metals, hydrates thereof, and carbonates of these metals; and n, x, y and z are an integer of 1 to 5, an integer of 0 to 10, an integer of 2 to 5, and an integer of 0 to 10, respectively.)

Examples of the inorganic compound of the general formula (XX) include alumina ($Al_2O_3$) such as γ-alumina and α-alumina; alumina monohydrate ($Al_2O_3 \cdot H_2O$) such as boehmite and diaspore; aluminum hydroxide [$Al(OH)_3$] such as gibbsite and bayerite; aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum oxide magnesium ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2SiO_4$, etc.), aluminum calcium silicate ($Al_2O_3 \cdot CaO \cdot 2SiO_2$, etc.), calcium magnesium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], and crystalline aluminosilicate containing hydrogen, alkali metal or alkaline earth metal that corrects the charge like various zeolites.

From the viewpoint of the balance between wear resistance and wet performance, the inorganic compound of the general formula (XX) preferably has an average particle diameter of 0.01 μm to 10 μm and more preferably an average particle diameter of 0.05 μm to 5 μm.

The total content of the filler is not particularly limited, but it is preferably 20 parts by mass to 150 parts by mass, more preferably 30 parts by mass to 120 parts by mass, and particularly preferably 40 parts by mass to 100 parts by mass with respect to 100 parts by mass of the rubber component. This is because, by optimizing the amount of the filler, the properties of a tire such as wear resistance, cut resistance and low loss properties, for example, can be further improved.

(Pore introducing agent)

The rubber composition of the present disclosure preferably further contains a pore introducing agent. When the rubber composition contains a pore introducing agent, the vulcanized rubber has pores on the surface or inside, or on the surface and inside. As a result, a tire using the vulcanized rubber has flexibility and easily adheres to an icy road surface, and water on the road surface is sucked into the pores on the tire surface and is easily removed from an icy and snowy road surface, which can improve the braking performance on ice.

Examples of the pore introducing agent include a foaming agent, a metal sulfate, a thermally expandable

microcapsule, porous cellulose particles, and a lignin derivative. These pore introducing agents may be used alone or in combination of two or more. It is preferable to use the foaming agent from the viewpoint of on-ice performance.

The content of the pore introducing agent in the rubber composition is not particularly limited, but it is preferably 0.1 parts by mass to 20 parts by mass, more preferably 0.3 parts by mass to 10 parts by mass, and still more preferably 0.5 parts by mass to 5 parts by mass with respect to 100 parts by mass of the rubber component, from the viewpoints of obtaining a desired pore ratio and maintaining the wear resistance and other properties.

The content ratio of the pore introducing agent and the cyclic polyol compound having a hydrocarbyl group is not particularly limited. However, from the viewpoint of improving wear resistance and on-ice performance, the mass ratio of the pore introducing agent and the cyclic polyol compound having a hydrocarbyl group (pore introducing agent/cyclic polyol compound having a hydrocarbyl group) is preferably 0.5 to 10, more preferably 1 to 8, still more preferably 2 to 7, and particularly preferably 3 to 7.

- Foaming agent

When the rubber composition of the present disclosure contains a foaming agent as the pore introducing agent, bubbles are formed in the vulcanized rubber because of the foaming agent during vulcanization of the rubber composition, and the vulcanized rubber is made into a foamed rubber. Since the foamed rubber has flexibility, a tire surface using the vulcanized rubber easily adheres to an icy road surface. In addition, the bubbles create holes (foaming pores) derived from bubbles on the surface of the vulcanized rubber and the surface of the tire, which function as channels for draining water. Specific examples of the foaming agent include azodicarbonamide (ADCA), dinitrosopentamethylenetetramine (DPT), dinitrosopentastyrenetetramine, benzenesulfonyl hydrazide derivatives, p,p'-oxybisbenzenesulfonyl hydrazide (OBSH), carbonates such as ammonium carbonate, sodium carbonate and potassium carbonate, bicarbonates (hydrogencarbonates) such as ammonium bicarbonate, sodium bicarbonate and potassium bicarbonate, other inorganic foaming agents, nitrososulfonyl azo compounds that generate nitrogen, N,N'-dimethyl-N,N'-dinitrosophthalamide, toluenesulfonyl hydrazide, p-toluenesulfonyl semicarbazide, and p,p'-oxybisbenzenesulfonyl semicarbazide. Among these, azodicarbonamide (ADCA), dinitrosopentamethylenetetramine (DPT), and an inorganic foaming agent are preferably used from the viewpoint of manufacturability. These foaming agents may be used alone or in combination of two or more.

The content of the foaming agent in the rubber composition is not particularly limited, but it is preferably 1 part by mass to 10 parts by mass and more preferably 2 parts by mass to 8 parts by mass with respect to 100 parts by mass of the rubber component.

The rubber composition may further use urea, zinc stearate, zinc benzenesulfinate, zinc white, or the like as a foaming aid. These may be used alone or in combination of two or more. By using a foaming aid together, the foaming reaction can be accelerated, the degree of completion of the reaction can be increased, and unnecessary deterioration over time can be suppressed.

- Metal sulfate

When the rubber composition of the present disclosure contains a metal sulfate as the pore introducing agent, the metal sulfate protrudes from a tire surface obtained by vulcanizing the rubber composition and functions as a claw without the disadvantage of being abrasive. Subsequently, the metal sulfate gradually gets out of the rubber matrix to create pores, and the pores serve as storage and passageways for draining the water film on an icy surface. Under these conditions, the contact between the tire surface (for example, the surface of a tread) and the ice loses lubrication, which improves the coefficient of friction. Examples of the metal sulfate include magnesium sulfate.

The metal sulfate is preferably micrometer-sized particles. Specifically, the average particle size and the median particle size (both expressed in mass) are preferably 1 μm to 1 mm, and the median particle size is more preferably 2 μm to 800 μm.

When the average particle size and the median particle size are 1 μm or more, it is easy to obtain the desired technical effects (that is, formation of suitable fine roughness). When the average particle size and the median particle size are 1 mm or less, especially in a case of using the rubber composition in a tread, deterioration in aesthetics is suppressed (the appearance of too obvious particles on the tread surface can be suppressed), and the gripping performance on melting ice is hardly deteriorated.

For all of these reasons, the median particle size of the metal sulfate is preferably 2 μm to 500 μm and more preferably 5 μm to 200 μm. This particularly preferred particle size range appears to correspond to the optimum compromise between the desired surface roughness on the one hand, and good contact of the rubber composition with ice on the other hand.

For the same reasons as described above, the content of the metal sulfate in the rubber composition is preferably 5 parts by mass to 40 parts by mass and more preferably 10 parts by mass to 35 parts by mass with respect to 100 parts by mass of the rubber component.

For example, various known methods by laser diffraction (see, for example, the standard ISO-8130-13 or the standard JIS K5600-9-3) may be used to analyze the particle size and calculate the median particle size of the microparticles (or the average diameter of the microparticles assumed to be substantially spherical).

Particle size analysis by mechanical sieving may be easily and preferably used, where the operation includes sieving a defined amount (for example, 200 g) of sample on a vibrating table with sieves with different diameters (for example, with meshes of 1000 μm, 800 μm, 630 μm, 500 μm, 400 μm, ... 100 μm, 80 μm, and 63 μm according to a progressive rate equal to 1.26) for 30 minutes; weighing the collected oversize particles of each sieve on a precision balance; estimating the percentage of the oversize particles of each mesh diameter with respect to the total mass of the material based on the weighing result; and finally calculating the median particle size (or median diameter) or the average particle size (or average diameter) based on the histogram of the particle size distribution with a known method.

- Thermally expandable microcapsule

The thermally expandable microcapsule includes a shell material made of a thermoplastic resin and a thermally expandable substance enclosed in the shell material. The shell material of the thermally expandable microcapsule may be made of a nitrile-based polymer.

The thermally expandable substance enclosed in the shell material of the microcapsule has the property of vaporizing or expanding due to heat, and it may be, for example, at least one selected from the group consisting of hydrocarbons such as isoalkane and normal alkane. Examples of the isoalkane include isobutane, isopentane, 2-methylpentane, 2-methylhexane, and 2,2,4-trimethylpentane, and examples of the normal alkane include n-butane, n-propane, n-hexane, n-heptane, and n-octane. Each of these hydrocarbons may be used alone or in combination. A preferred form of the thermally expandable material is a substance in which a hydrocarbon that is gas at room temperature is dissolved in a hydrocarbon that is liquid at room temperature. By using such a mixture of hydrocarbons, it is possible to obtain a sufficient expansion force from a low-temperature range to a high-temperature range in the vulcanization molding temperature range (150 °C to 190 °C) of an unvulcanized tire.

Examples of such a thermally expandable microcapsule include product names "EXPANCEL 091DU-80" and "EXPANCEL 092DU-120" manufactured by Expancel in Sweden, and product names "Matsumoto Microsphere F-85D" and "Matsumoto Microsphere F-100D" manufactured by Matsumoto Yushi-Seiyaku Co., Ltd.

The content of the thermally expandable microcapsule in the rubber composition is preferably 0.1 parts by mass to 10 parts by mass and more preferably 0.5 parts by mass to 5 parts by mass with respect to 100 parts by mass of the rubber component.

- Porous cellulose particle

When the rubber composition of the present disclosure contains porous cellulose particles as the pore introducing agent and when the porous cellulose particles are exposed on a tire surface obtained by vulcanizing the rubber composition, water on an icy and snowy road surface is absorbed by the porous cellulose particles, thereby removing the water between the tire and the road surface. Further, the presence of cellulose, which is a polysaccharide, causes interaction between the tire and water on the icy and snowy road surface, which can further enhance the interaction between the tire and the water due to modified polyoxyalkylene glycol.

The porous cellulose particles are cellulose particles having a porous structure with a porosity of 75 % to 95 %. When they are blended in the rubber composition, the on-ice performance can be remarkably improved. When the porosity of the porous cellulose particles is 75 % or more, it is possible to obtain excellent on-ice performance-improving effects. When the porosity is 95 % or less, the strength of the particles can be improved. The porosity is more preferably 80 % to 90 %.

The porosity of the porous cellulose particles can be determined with the following equation by measuring the volume of a sample (that is, porous cellulose particles) of a certain mass with a graduated cylinder and determining the bulk specific gravity.

Porosity [%] = {1-(bulk specific gravity of sample [g/ml])/(true specific gravity of sample [g/ml])}$\times$100

As used herein, the true specific gravity of cellulose is 1.5.

The particle diameter of the porous cellulose particles is not particularly limited, but the average particle diameter of the porous cellulose particles is preferably 1000 μm or less from the viewpoint of wear resistance. The lower limit of the average particle diameter is not particularly limited, but it is preferably 5 μm or more. The average particle diameter is more preferably 100 μm to 800 μm and still more preferably 200 μm to 800 μm.

Spherical particles whose ratio of major axis/minor axis is 1 to 2 are preferably used as the porous cellulose particles. The use of particles with such a spherical structure improves the dispersibility in the rubber composition and

contributes to the improvement of on-ice performance and the maintenance of wear resistance and other properties. The ratio of major axis/minor axis is more preferably 1.0 to 1.5.

The average particle diameter of the porous cellulose particles and the ratio of major axis/minor axis are determined as follows. An image is obtained by observing the porous cellulose particles with a microscope, and the major axis and the minor axis (if the major axis and the minor axis are the same, the length in the direction of one axis and the length in the direction of an axis perpendicular to the one axis) of 100 particles are measured using this image. The average value of the 100 particles is calculated to obtain the average particle diameter, and the average of values obtained by dividing the major axis by the minor axis is calculated to obtain the ratio of major axis/minor axis.

The porous cellulose particles are commercially available as "Viscopearl" manufactured by Rengo Co., Ltd., and those described in JP 2001-323095 A, JP 2004-115284 A, and the like can also be suitably used. The content of the porous cellulose particles in the rubber composition is preferably 0.3 parts by mass to 20 parts by mass with respect to 100 parts by mass of the rubber component. When the content is 0.3 parts by mass or more, the effect of improving on-ice performance can be increased. When the content is 20 parts by mass or less, it is possible to prevent a too high rubber hardness and to prevent deterioration of wear resistance. The content of the porous cellulose particles is more preferably 1 part by weight to 15 parts by weight, and it is still more preferably 3 parts by mass to 15 parts by mass.

- Lignin derivative

When the rubber composition of the present disclosure contains a lignin derivative as the pore introducing agent, the effect of improving on-ice performance can be increased.

Lignin sulfonate is preferably used as the lignin derivative. Examples of the lignin sulfonate include an alkali metal salt, an alkaline earth metal salt, an ammonium salt, and an alcohol amine salt of lignin sulfonic acid, and at least one of these can be contained and used. It is preferably an alkali metal salt and/or an alkaline earth metal salt of lignin sulfonic acid, and examples thereof include potassium salt, sodium salt, calcium salt, magnesium salt, lithium salt, barium salt, and a mixed salt of these.

(Foaming aid)

When the rubber composition of the present disclosure contains a foaming agent as the pore introducing agent, it is preferable to further contain a foaming aid. Examples of the foaming aid include urea, zinc stearate, zinc benzenesulfinate, and zinc white. These foaming aids may be used alone or in combination of two or more.

By using the foaming aid together, the foaming reaction can be accelerated, the degree of completion of the reaction can be increased, and unnecessary deterioration over time can be suppressed.

The total content of the foaming agent and the foaming aid is preferably 1 part by mass to 30 parts by mass with respect to 100 parts by mass of the rubber component. When the total content of the foaming agent and the foaming aid is 1 part by mass or more, the rubber composition can be sufficiently foamed during vulcanization, and the foaming ratio of the vulcanized rubber can be maintained at a high level. On the other hand, even when the total content of the foaming agent and the foaming aid is 30 parts by mass or less, a decrease in the foaming ratio can be suppressed.

From the viewpoint of suppressing a decrease in the foaming ratio as described above, the total content of the foaming agent and the foaming aid is preferably 3 parts by mass or more and more preferably 5 parts by mass or more with respect to 100 parts by mass of the rubber component. Further, from the viewpoint of suppressing a decrease in the foaming ratio as described above, the total content of the foaming agent and the foaming aid is preferably 25 parts by mass or less and more preferably 20 parts by mass or less with respect to 100 parts by mass of the rubber component.

In the rubber composition of the present disclosure, a mass ratio of the foaming agent and the foaming aid (foaming agent: foaming aid) is preferably 1:1.1 to 1:3.3. When the mass ratio (foaming agent: foaming aid) is less than 1:1.1, the rubber composition may not be sufficiently foamed during vulcanization, and the foaming ratio of the vulcanized rubber may decrease. On the other hand, when the mass ratio (foaming agent: foaming aid) exceeds 1:3.3, the foaming ratio may decrease.

From the viewpoint of suppressing a decrease in the foaming ratio as described above, the mass ratio of the foaming agent and the foaming aid (foaming agent: foaming aid) is preferably 1:1.2 or more and more preferably 1:1.3 or more. Further, from the viewpoint of suppressing a decrease in the foaming ratio as described above, the mass ratio of the foaming agent and the foaming aid (foaming agent: foaming aid) is preferably 1:3.2 or less, more preferably 1:3.1 or less, still more preferably 1:2.9 or less, still more preferably 1:2.7 or less, still more preferably 1:2.5 or less, and particularly preferably 1:2.3 or less.

From the viewpoints of the foaming ratio of the vulcanized rubber and the on-ice performance of the tire, the content of the foaming aid is preferably in a range of 4 parts by mass to 14 parts by mass and more preferably in a range of 6 parts by mass to 14 parts by mass with respect to 100 parts by mass of the rubber component.

(Organic acid)

The rubber composition of the present disclosure may contain an organic acid, if necessary. In this case, the SP value of the organic acid is preferably 9.15 $(cal/cm^3)^{1/2}$ to 16.0 $(cal/cm^3)^{1/2}$. The organic acid has effects of balancing the rate of the decomposition and foaming reaction of the foaming agent and the rate of the vulcanization reaction of the rubber composition during the vulcanization of the rubber composition, thereby improving the foaming ratio of the vulcanized rubber. Therefore, by blending the organic acid in the rubber composition, the decomposition and foaming reaction of the foaming agent can be accelerated while maintaining good workability of the rubber composition, and the rate of the decomposition and foaming reaction and the rate of the vulcanization reaction of the rubber composition can be balanced to improve the foaming ratio of the vulcanized rubber. By applying the rubber composition to a tire, the on-ice performance of the tire can be improved.

When the SP value of the organic acid is less than 9.15 $(cal/cm^3)^{1/2}$, the decomposition of the foaming agent may not be sufficiently accelerated. When the SP value of the organic acid exceeds 16.0 $(cal/cm^3)^{1/2}$, the adhesion of the rubber composition containing the organic acid increases, and the rubber composition may adhere to production equipment such as rolls during the production of the rubber composition, which deteriorates the workability of the rubber composition.

From the same point of view, the SP value of the organic acid is preferably 10.5 $(cal/cm^3)^{1/2}$ to 14.3 $(cal/cm^3)^{1/2}$. When the SP value of the organic acid is 10.5 $(cal/cm^3)^{1/2}$ or more, the effect of accelerating the decomposition of the foaming agent is further improved. When the SP value of the organic acid is 14.3 $(cal/cm^3)^{1/2}$ or less, the adhesion of the rubber composition containing the organic acid can be further reduced, and the workability of the rubber composition is further improved.

Stearic acid, which is commonly used as a vulcanization aid for the rubber composition, has an SP value of 9.12 $(cal/cm^3)^{1/2}$ and has a low effect of accelerating the decomposition of the foaming agent.

In the present specification, the SP value (solubility parameter) of the organic acid is calculated with the Fedors method.

The organic acid may be any of monocarboxylic acid, dicarboxylic acid, tricarboxylic acid, and the like, and it may be aliphatic or aromatic. Further, it may have a functional group other than a carboxyl group, such as a hydroxyl group, a ketone group, and an ethylenically unsaturated group.

The organic acid preferably has an aromatic ring (it is preferably aromatic), and it is preferably monocarboxylic acid. When the organic acid has an aromatic ring, the adhesion of the rubber composition can be further reduced, the workability of the rubber composition is further improved, and the rubber composition hardly adheres to production equipment such as rolls.

Examples of the aliphatic monocarboxylic acid include palmitic acid.

Examples of the aliphatic dicarboxylic acid include oxalic acid, malonic acid, succinic acid, glutaric acid, adipic acid, pimelic acid, suberic acid, azelaic acid, and sebacic acid.

Examples of the aromatic monocarboxylic acid include benzoic acid and salicylic acid.

Examples of the aromatic dicarboxylic acid include phthalic acid.

Examples of the organic acid having a functional group other than a carboxyl group include tartaric acid, malic acid, maleic acid, glycolic acid, and $\alpha$-ketoglutaric acid.

These organic acids may be used alone or in combination of two or more.

The organic acid is particularly preferably benzoic acid. When benzoic acid is blended in the rubber composition, the adhesion of the rubber composition can be further reduced, the workability of the rubber composition is further improved, and the rubber composition hardly adheres to production equipment such as rolls.

The content of the organic acid is preferably 0.1 parts by mass to 7 parts by mass, more preferably 1.5 parts by mass to 7 parts by mass, and still more preferably 3 parts by mass to 7 parts by mass with respect to 100 parts by mass of the rubber component, from the viewpoints of the workability of the rubber composition, the foaming ratio of the vulcanized rubber, and the on-ice performance of the tire.

The total content of the foaming agent and the organic acid is preferably 3 parts by mass or more and less than 15 parts by mass, more preferably 5 parts by mass or more and less than 15 parts by mass, and still more preferably 7 parts by mass or more and less than 15 parts by mass with respect to 100 parts by mass of the rubber component, from the viewpoints of the foaming ratio of the vulcanized rubber and the on-ice performance of the tire.

The mass ratio of the foaming agent and the organic acid (foaming agent: organic acid) is preferably in a range of 1:0.5 to 1:1.5 and more preferably in a range of 1:0.7 to 1:1.3, from the viewpoints of the foaming ratio of the vulcanized rubber and the on-ice performance of the tire.

(Composite fiber)

The rubber composition of the present disclosure preferably contains a composite fiber in addition to the above-described rubber component, cyclic polyol compound and liquid polymer, and optional components such as a filler, a pore

introducing agent and a foaming aid.

Containing the composite fiber can sufficiently ensure an affinity with water. Particularly when the rubber composition containing the composite fiber is used in a tire, excellent drainage properties and on-ice performance can be obtained.

The composite fiber is preferably made of a hydrophilic resin having a coating layer formed on the surface. This is because providing a coating layer on the surface of the composite fiber improves the dispersibility of the composite fiber in the rubber composition.

The hydrophilic resin is preferably insoluble in water. Using a water-insoluble hydrophilic resin can suppress dissolution of the composite fiber even when the composite fiber is exposed on the surface of a product (such as a tire).

The hydrophilic resin is not particularly limited if it is a resin having an affinity with water, that is, a resin having a hydrophilic group in a molecule. Specifically, it is preferably a resin containing an oxygen atom, a nitrogen atom or a sulfur atom, and examples thereof include a resin containing at least one group selected from the group consisting of -OH, -C(=O)OH, -OC(=O)R (where R is an alkyl group), -NH2, -NCO, and -SH. Among these groups, -OH, -C(=O)OH, -OC(=O)R, -NH2, and -NCO are preferred.

Specific examples of the hydrophilic resin include an ethylene-vinyl alcohol copolymer, a vinyl alcohol homopolymer, a poly (meth) acrylic acid resin or its ester resin (hereinafter, a copolymer containing a structural unit derived from (meth) acrylic acid and a (co)polymer containing a structural unit derived from (meth) acrylic acid ester are collectively referred to as a (meth) acrylic resin), a polyamide resin, a polyethylene glycol resin, a carboxy vinyl copolymer, a styrene-maleic acid copolymer, a polyvinylpyrrolidone resin, a vinylpyrrolidone-vinyl acetate copolymer, a polyester resin, and a cellulose-based resin. Among these, an ethylene-vinyl alcohol copolymer, a vinyl alcohol homopolymer, a poly (meth) acrylic acid resin, a polyamide resin, an aliphatic polyamide-based resin, an aromatic polyamide-based resin, a polyester resin, a polyvinyl alcohol-based resin, a cellulose-based resin, or a (meth) acrylic resin is preferred, and an ethylene-vinyl alcohol copolymer is more preferred.

It is preferable that the surface of the fiber made of the hydrophilic resin be formed with a coating layer having an affinity with a rubber component, where the coating layer is preferably made of a resin with a melting point lower than the maximum vulcanization temperature (hereinafter also referred to as "resin with a low melting point"). By forming such a coating layer, it is possible to exhibit good affinity with the rubber component in the vicinity of the composite fiber while effectively retaining the affinity with water possessed by the hydrophilic resin itself, and it is also possible to capture the hydrophilic resin which is hardly melted during vulcanization (during foaming) to accelerate the formation of pores inside the composite fiber. In other words, it is possible to sufficiently exhibit the effect of improving on-ice performance of the pores inside the composite fiber while ensuring good dispersion of the composite fiber in the rubber component to sufficiently exhibit the drainage properties provided by the hydrophilic resin. Further, such a resin with a low melting point is melted during vulcanization to form a flowable coating layer, which contributes to the adhesion of the rubber component to the composite fiber and provides good on-ice performance and wear resistance.

The thickness of the coating layer may vary depending on, for example, the blending amount of the hydrophilic resin and the average diameter of the composite fiber, but it is preferably 0.001 $\mu$m to 10 $\mu$m and more preferably 0.001 $\mu$m to 5 $\mu$m. By forming a coating layer with a thickness within the above ranges, the desired effects of the present disclosure can be sufficiently exhibited. The coating layer may be formed over the entire surface of the hydrophilic resin or may be formed on the surface of a part of the hydrophilic resin. Specifically, the coating layer is preferably formed so as to occupy at least 50 % of the total surface area of the hydrophilic resin.

Specifically, the resin with a low melting point used in the coating layer is preferably a resin in which the polar component is 50 % by mass or less of all components in the resin with a low melting point, and it is more preferably a polyolefin-based resin. When it is a resin in which the polar component is within the above range of all components, the SP value difference from the rubber component is moderate, and the melting point is suitably lower than the maximum vulcanization temperature. As a result, it can be easily melted during vulcanization to accelerate the foaming of the vulcanized rubber while sufficiently securing good affinity with the rubber component. Therefore, it is possible to reliably form pores inside the composite fiber while more reliably improving the dispersibility of the fiber made of the hydrophilic resin in the rubber composition.

The polyolefin-based resin may be branched, linear, or the like. The polyolefin-based resin may be an ionomer resin in which molecules of an ethylene-methacrylic acid copolymer are cross-linked by metal ions. Specific examples of the polyolefin-based resin include polyethylene, polypropylene, polybutene, polystyrene, ethylene-propylene copolymer, ethylene-methacrylic acid copolymer, ethylene-ethyl acrylate copolymer, ethylene-propylene-diene terpolymer, ethylene-vinyl acetate copolymer, and ionomer resins thereof. These polyolefin-based resins may be used alone or in combination of two or more.

Among these, the polyolefin-based resin is preferably a polyethylene-based resin, a polypropylene-based resin, polyolefin ionomer, or maleic anhydride-modified $\alpha$-polyolefin. When polyolefin ionomer or maleic anhydride-modified $\alpha$-polyolefin is used, it also adheres to the hydroxyl group of the hydrophilic resin, which can further improve the rubber strength.

A method of blending these resins using a mixing mill, subjecting the mixture to melt spinning to form undrawn yarn, and thermally drawing the undrawn yarn to obtain a fibrous material may be adopted to produce the composite fiber made of a hydrophilic resin on which a coating layer made of the resin with a low melting point is formed. It is also possible to adopt a method of blending the resins using two twin-screw extruders equipped with a die and then obtaining a fibrous material in the same manner as described above. In this case, the hydrophilic resin and the resin with a low melting point are each simultaneously extruded from the two die outlets to form undrawn yarn. The amount of these resins to be added into a mixing mill or hopper may vary depending on the length and diameter of the composite (fiber) to be obtained. However, the amount of the resin with a low melting point is preferably 5 parts by mass to 300 parts by mass and more preferably 10 parts by mass to 150 parts by mass with respect to 100 parts by mass of the hydrophilic resin. By adding these resins in an amount within the above ranges, a coating layer capable of exhibiting desired effects is effectively formed on the surface of the composite (fiber) made of the hydrophilic resin obtained after the drawing process.

The average length of the obtained composite fiber is preferably 0.1 mm to 500 mm and more preferably 0.1 mm to 7 mm, and the average diameter of the obtained composite fiber is preferably 0.001 mm to 2 mm and more preferably 0.005 mm to 0.5 mm. When the average length and the average diameter are within the above ranges, the composite fiber will not be entangled with each other more than necessary, and the dispersibility will not be impaired. The aspect ratio is preferably 10 to 4000 and more preferably 50 to 2000. The aspect ratio means a ratio of the length to the diameter of the composite fiber.

For the obtained composite fiber, a ratio (A/B) of a length A of a cross section perpendicular to the length direction in the major axis direction and a length B of the cross section in the minor axis direction perpendicular to the major axis direction is preferably more than 1, more preferably 1.5 or more, still more preferably 1.8 or more, and particularly preferably 2.0 or more. The ratio A/B is preferably 20 or less, more preferably 15 or less, and particularly preferably 10 or less. When it is within the above ranges, the on-ice performance is further improved. The shape of the cross section is not particularly limited if A/B is more than 1, and it may be elliptical, rectangular, polygonal, or an indefinite shape.

The blending amount of the composite fiber made of the hydrophilic resin on which the coating layer is formed is preferably 0.1 parts by mass to 100 parts by mass, more preferably 0.3 parts by mass to 30 parts by mass, still more preferably 0.5 parts by mass to 10 parts by mass, and even more preferably 1 part by mass to 6 parts by mass with respect to 100 parts by mass of the rubber component. When the blending amount of the composite fiber made of the hydrophilic resin on which the coating layer is formed is within the above ranges, it is possible to maintain sufficient durability while exhibiting good drainage properties by forming pores inside the composite fiber.

The content ratio of the composite fiber and the cyclic polyol compound having a hydrocarbyl group is not particularly limited. However, from the viewpoint of improving wear resistance and on-ice performance, the mass ratio of the composite fiber and the cyclic polyol compound having a hydrocarbyl group (composite fiber/cyclic polyol compound having a hydrocarbyl group) is preferably 0.1 to 10, more preferably 0.5 to 8, still more preferably 1 to 6, and particularly preferably 1.5 to 5.

The content ratio of the composite fiber and the pore introducing agent is not particularly limited. However, from the viewpoint of achieving and improving both wear resistance and on-ice performance, the mass ratio of the composite fiber and the pore introducing agent (pore introducing agent/composite fiber) is preferably 0.5 to 10, more preferably 1 to 8, still more preferably 1.5 to 7, and particularly preferably 2 to 6.

Pores are formed in a vulcanized rubber composition obtained by vulcanizing the rubber composition of the present disclosure because of the pore introducing agent and the composite fiber. As used herein, the pore is a pore with an average diameter of about 1 μm to 500 μm. The diameter of the pore is the largest diameter D of the pore 20 (if the pore is not spherical, it is the maximum distance D among the distances between any two points on the inner wall of the pore).

The average diameter of the pores is an average value of the diameters D of the pores 20 in the vulcanized rubber composition. In the present disclosure, a cross section of the vulcanized rubber composition is observed using a digital microscope ("VHX-100" manufactured by Keyence Corporation), and the average value of the diameters of all pores in one field of view (2.5 mm × 2.5 mm) is obtained. In the vulcanized rubber composition of the present disclosure, the shape and size of the pore do not vary greatly in one vulcanized rubber composition, so that the average value of the pores in one field of view can be taken as the average diameter of the pores.

The pore ratio of the vulcanized rubber composition is preferably 5 % to 45 %. By setting the lower limit of the pore ratio to 5 %, the on-ice performance can be more reliably improved. From the same point of view, the pore ratio is preferably 7 % or more and more preferably 15 % or more. On the other hand, by setting the upper limit of the pore ratio to 45 %, a decrease in wear resistance can be more reliably suppressed even when there is a plurality of pores. From the same point of view, the pore ratio is preferably 40 % or less and more preferably 37 % or less.

The pore ratio is a ratio (% by volume) of the volume of the pores in the vulcanized rubber composition of the present disclosure. The method of measuring the pore ratio is not particularly limited, and the pore ratio can be measured using, for example, a densimeter (ViBRA densimeter "DMA-220" manufactured by SHINKO DENSHI CO., LTD.).

The pore ratio can be controlled by changing the vulcanization conditions or the content of a pore introducing agent such as a foaming agent or a composite fiber.

(Other components)

In addition to the components described above, the rubber composition of the present disclosure may contain compounding agents commonly used in the rubber industry as other components. Examples of the other component include a silane coupling agent, a cross-linking agent, a vulcanization accelerator, polyethylene glycol, a softener, a resin, an age resistor, and zinc oxide, which may be appropriately selected and contained if the effects of the present disclosure are not impaired. Commercially available products may be suitably used as these compounding agents.

The age resistor is not particularly limited, and examples thereof include amine-based, quinoline-based, quinone-based, phenol-based and imidazole-based compounds, and age resistors such as metal carbamates.

Examples of the amine-based age resistor include a phenylenediamine-based age resistor having a phenylenediamine skeleton (-NH-Ph-NH-).

Specific examples thereof include N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-dicyclohexyl-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine.

Among these amine-based age resistors, it is preferably one that has no double bond other than the phenylenediamine portion (-NH-Ph-NH-). Specifically, it is preferable to use an amine-based age resistor represented by ($R^1$-NH-Ph-NH-$R^2$) such as the following formula (1).

[Chem. 4]

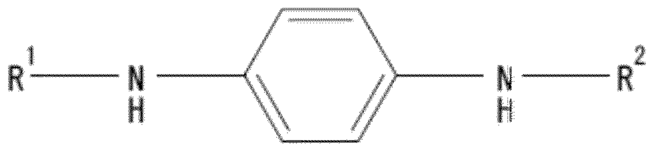

··· (1)

[where $R^1$ and $R^2$ are each independently a monovalent saturated hydrocarbon group]

The monovalent saturated hydrocarbon groups represented by $R^1$ and $R^2$ may be the same or different, but from the viewpoint of synthesis, they are preferably the same.

The number of carbon atoms of the monovalent saturated hydrocarbon group is preferably 1 to 20, more preferably 3 to 10, and particularly preferably 6 and 7. When the number of carbon atoms of the saturated hydrocarbon group is 20 or less, the number of moles per unit mass is large, so that the effect of the age resistor is good, and the ozone resistance of the rubber composition is improved.

Further, from the viewpoint of further improving the ozone resistance of the rubber composition, $R^1$ and $R^2$ in the general formula (1) are preferably each independently a chain or cyclic monovalent saturated hydrocarbon group having 1 to 20 carbon atoms.

Examples of the monovalent saturated hydrocarbon group include an alkyl group and a cycloalkyl group, where the alkyl group may be linear or branched, and an alkyl group or the like may be further bonded to the cycloalkyl group as a substituent.

Examples of the alkyl group include a methyl group, an ethyl group, an n-propyl group, an isopropyl group, an n-butyl group, an isobutyl group, a sec-butyl group, a tert-butyl group, an n-pentyl group, a neopentyl group, a 1-methylpentyl group, a 2-methylpentyl group, a 3-methylpentyl group, a 4-methylpentyl group, a 1,2-dimethylpentyl group, a 1,3-dimethylpentyl group, a 1,4-dimethylpentyl group, a 2,3-dimethylpentyl group, a 2,4-dimethylpentyl group, a 3,4-dimethylpentyl group, an n-hexyl group, a 1-methylhexyl group, a 2-methylhexyl group, various octyl groups, various decyl groups, and various dodecyl groups, among which a 1,4-dimethylpentyl group is preferable.

Examples of the cycloalkyl group includes a cyclopentyl group, a methylcyclopentyl group, a cyclohexyl group, a methylcyclohexyl group, a cycloheptyl group, and a cyclooctyl group, among which a cyclohexyl group is preferable.

The amine-based age resistor represented by the general formula (1) may be supported by any carrier. For example, the amine-based age resistor represented by the formula (1) may be supported by an inorganic filler such as silica or calcium carbonate.

Further, the amine-based age resistor represented by the general formula (1) may form a masterbatch together with a rubber component. The rubber component used in forming the masterbatch is not particularly limited, and it may be diene-based rubber such as natural rubber (NR) or ethylene-propylene-diene rubber (EPDM), for example.

The amine-based age resistor represented by the formula (1) can also be used as a salt with an organic acid. The organic acid used when the amine-based age resistor is used as a salt is not particularly limited, and examples thereof

include stearic acid.

Age resistors other than the above-described amine-based age resistor can also be suitably used. For example, a quinoline-based age resistor such as 2,2,4-trimethyl-1,2-dihydroquinoline polymer and 6-ethoxy-2,2,4-trimethyl-1,2-dihydroquinoline can be used.

The above-described age resistors may be used alone or in combination of two or more.

The age resistor preferably contains at least one selected from the group consisting of an amine-based age resistor and a quinoline-based age resistor and more preferably contains at least an amine-based age resistor among those described above.

When silica is contained as the above-described filler, it is preferable to further contain a silane coupling agent. This is because the effects of silica in terms of cut resistance, reinforcing properties, and low loss properties can be further improved in this case. A known silane coupling agent may be appropriately used as the silane coupling agent.

Examples of the silane coupling agent include bis (3-triethoxysilylpropyl) polysulfide, bis (3-triethoxysilylpropyl) tetrasulfide, bis (3-triethoxysilylpropyl) trisulfide, bis (3-triethoxysilylpropyl) disulfide, bis (2-triethoxysilylethyl) tetrasulfide, bis (3-trimethoxysilylpropyl) tetrasulfide, bis (2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis (3-diethoxymethylsilylpropyl) tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyl tetrasulfide. These silane coupling agents may be used alone or in combination of two or more.

The content of the silane coupling agent varies depending on the type of the silane coupling agent and the like, but it is preferably 0.2 or less, more preferably 0.1 or less, and still more preferably 0.09 or less in mass ratio with respect to the content of the silica. This is because the cut resistance of the rubber composition can be further improved by reducing the content of the silane coupling agent to 0.2 or less in mass ratio with respect to the content of the silica.

The cross-linking agent is not particularly limited and can be appropriately selected depending on the purpose. Examples thereof include a sulfur-based cross-linking agent, an organic peroxide-based cross-linking agent, an inorganic cross-linking agent, a polyamine cross-linking agent, a resin cross-linking agent, a sulfur compound-based cross-linking agent, and an oxime-nitrosamine-based cross-linking agent. Among these cross-linking agents, a sulfur-based cross-linking agent (vulcanizing agent) is more preferable for a rubber composition for tires.

The content of the cross-linking agent is not particularly limited and can be appropriately selected depending on the purpose. It is preferably 0.1 parts by mass to 20 parts by mass with respect to 100 parts by mass of the rubber component.

When sulfur is used as the cross-linking agent, it is preferable to contain a vulcanization accelerator. The vulcanization accelerator may be a conventionally known one and is not particularly limited. Examples thereof include sulfenamide-based vulcanization accelerators such as CBS (N-cyclohexyl-2-benzothiadylsulfenamide), TBBS (N-t-butyl-2-benzothiadylsulfenamide) and TBSI (N-t-butyl-2-benzothiadylsulfenimide); guanidine-based vulcanization accelerators such as DPG (diphenylguanidine); thiuram-based vulcanization accelerators such as tetraoctylthiuram disulfide and tetrabenzylthiuram disulfide; and zinc dialkyldithiophosphate. The content is preferably less than the sulfur content, and more preferably about 1 part by mass to 10 parts by mass with respect to 100 parts by mass of the rubber component.

The rubber composition of the present disclosure preferably further contains glycerol monostearate from the viewpoint of shortening the scorch time and further improving the operability such as increasing the vulcanization rate during tire production.

The content of the glycerol monostearate is 0.1 parts by mass or more, preferably 0.3 parts by mass or more, and more preferably 0.5 parts by mass or more with respect to 100 parts by mass of the rubber component. When the content is less than 0.1 parts by mass, the effects of the present disclosure may be unsatisfactory. The content is 3.5 parts by mass or less, preferably 3 parts by mass or less, and more preferably 2.5 parts by mass or less. When the content exceeds 3.5 parts by mass, the scorch time tends to be too short.

The content of the polyethylene glycol is 0.1 parts by mass or more, preferably 0.3 parts by mass or more, and more preferably 0.5 parts by mass or more with respect to 100 parts by mass of the rubber component. When the content is less than 0.1 parts by mass, the effects of the present disclosure may be unsatisfactory. The content is 3.5 parts by mass or less, preferably 3 parts by mass or less, and more preferably 2.5 parts by mass or less. When the content exceeds 3.5 parts by mass, the scorch time tends to be too short.

The rubber composition of the present disclosure may also contain a softener from the viewpoint of increasing the flexibility of rubber and realizing better wet performance and on-ice performance. The softener may be a conventionally known one and is not particularly limited. Examples thereof include petroleum-based softeners such as aroma oil, paraffin oil and naphthenic oil, and plant-based softeners such as palm oil, castor oil, cottonseed oil, and soybean oil. These softeners may be appropriately selected and used, and they may be used alone or in combination of two or more.

When the softener is contained, it is preferable to contain one that is liquid at room temperature such as 25 °C among the above-described softeners from the viewpoint of ease of handling, and examples thereof include petroleum-based softeners such as aroma oil, paraffin oil and naphthenic oil.
The rubber composition of the present disclosure may contain a resin from the viewpoint of increasing the flexibility of rubber and realizing better wet performance and on-ice performance. Various natural resins and synthetic resins can be used as the resin. Specifically, it is preferable to use a rosin-based resin, a terpene-based resin, a petroleum-based resin, a phenol-based resin, a coal-based resin, a xylene-based resin, or the like. These resins may be used alone or in combination of two or more.
A method of producing the rubber composition of the present disclosure is not particularly limited. For example, it may be obtained by blending and kneading each component described above with a known method.

<Tire>

The tire of the present disclosure uses the rubber composition of the present disclosure described above in a tread portion. By using the rubber composition in a tread portion, excellent wear resistance can be realized while maintaining good on-ice performance.
The tire of the present disclosure can be used, for example, as a tire for construction vehicles, a tire for trucks and buses, a tire for aircraft, or a tire for passenger vehicles, and it is particularly preferably used as a tire for passenger vehicles, a tire for trucks and buses, or a tire for light trucks. This is because the vulcanized rubber composition used as a material of tread portion has excellent on-ice performance and wear resistance, and using it as a tire for passenger vehicles, a tire for trucks and buses, or a tire for light trucks brings considerable benefits.
When the rubber composition of the present disclosure described above is used in a tread portion, a structure described in the following publications can be adopted as the structure of the tread, for example.
JP 2016-203842 A, JP 2009-196527 A, JP 2000-225815 A, JP 2000-264019 A, JP 2003-211921 A, and WO/2014/196409.
The tire of the present disclosure is not particularly limited except that the rubber composition of the present disclosure described above is used in a tread portion of the tire, and the tire can be produced according to a conventional method. The gas to be filled in the tire may be an inert gas such as nitrogen, argon or helium, in addition to normal air or air whose oxygen partial pressure has been adjusted.

EXAMPLES

The following describes the present disclosure in more detail with reference to examples, but the present disclosure is not limited to the following examples.

(Examples 1 and 2, Comparative Examples 1 to 3)

Samples of rubber composition were prepared by blending and kneading in a conventional manner according to the composition listed in Table 1.
The obtained samples were each subjected to vulcanization treatment and then to the following evaluations (1) and (3).

<Evaluation>

(1) Foaming ratio (pore ratio) of vulcanized rubber

After cutting each sample of vulcanized rubber composition at an arbitrary point, the weight of each cut sample of vulcanized rubber composition was measured using a precision electronic balance, the difference from the theoretical weight ((theoretical specific gravity/measured specific gravity-1)×100) was calculated, and the result was taken as the foaming ratio (pore ratio) (%). The obtained foaming ratio is listed in Table 1.

(2) Wear resistance of vulcanized rubber

The amount of wear of each sample of vulcanized rubber composition was measured with the B method of the sliding wear test of JIS K 7218:1986. The measurement temperature was room temperature (23 °C), and the load was 16 N.
The evaluation was carried out by calculating the reciprocal of the amount of wear, and the results are indicated as an index with the reciprocal of the amount of wear of the vulcanized rubber of Comparative Example 1 being 100. A larger

index indicates a smaller amount of wear, that is, better wear resistance. The evaluation results are listed in Table 1.

(3) On-ice performance of vulcanized rubber

Each sample of vulcanized rubber composition was molded into a test piece having a diameter of 50 mm and a thickness of 10 mm, then the test piece was pressed onto fixed ice and rotated, the generated frictional force was detected by a load cell, and the coefficient of dynamic friction μ was calculated. The measurement temperature was -2 °C, the surface pressure was 12 kgf/$cm^2$, and the rotating circumferential speed of the sample was 20 cm/s.

The evaluation results are indicated as an index with the coefficient of dynamic friction μ of Comparative Example 1 being 100. A larger index indicates a larger coefficient of dynamic friction μ, that is, better on-ice performance. The evaluation results are listed in Table 1.

[Table 1]

Table 1

| | | Example 1 | Comparative Example 1 | Comparative Example 2 | Example 2 | Comparative Example 3 |
|---|---|---|---|---|---|---|
| Composition | Natural rubber | 50 | 50 | 50 | 50 | 50 |
| | Modified SBR *1 | 20 | 20 | 20 | 50 | 50 |
| | Butadiene rubber *2 | 30 | 30 | 30 | 0 | 0 |
| | Carbon black *3 | 35 | 35 | 35 | 35 | 35 |
| | Silica *4 | 35 | 35 | 35 | 35 | 35 |
| | Silane coupling agent *5 | 2.8 | 2.8 | 2.8 | 2.8 | 2.8 |
| | Foaming agent *6 | 4.5 | 4.5 | 4.5 | 4.5 | 4.5 |
| | Short fiber *7 | 2 | 2 | 2 | 2 | 2 |
| | Sorbitan *8 | 1 | - | - | 1 | 0 |
| | Sorbitol *9 | - | - | 1 | - | - |
| | Liquid polymer *10 | 10 | 10 | 10 | 10 | 10 |
| | Age resistor *11 | 2 | 2 | 2 | 2 | 2 |
| | Sulfur | 1 | 1 | 1 | 1 | 1 |
| | Vulcanization accelerator | Total 2 | Total 2 | Total 2 | Total 2 | Total 2 |

(continued)

| | | Example 1 | Comparative Example 1 | Comparative Example 2 | Example 2 | Comparative Example 3 |
|---|---|---|---|---|---|---|
| Evaluation | Foaming ratio | 35% | 35% | 35% | 20% | 20% |
| | Wear resistance | 108 | 100 | 104 | 105 | 100 |
| | On-ice performance | 102 | 100 | 102 | 102 | 100 |

*1 Modified styrene-butadiene rubber: N,N-bis-(trimethylsilyl)-aminopropylmethyldiethoxysilane-modified SBR
*2 Butadiene rubber: manufactured by Ube Industries, Ltd., "UBEPOL BR150L"
*3 Carbon black: SAF grade carbon black
*4 Silica: manufactured by Tosoh Silica Corporation, product name "Nipsil AQ"
*5 Silane coupling agent: bis(3-triethoxysilyl)propylpolysulfide, manufactured by Shin-Etsu Chemical Co., Ltd.
*6 Foaming agent: dinitrosopentamethylenetetramine, manufactured by EIWA CHEMICAL IND. CO.,LTD., "Cellular Z-K"
*7 Short fiber: hydrophilic short fiber prepared with the following method

According to Production Example 3 described in JP 2012-219245 A, two twin-screw extruders were used, 40 parts by mass of polyethylene [manufactured by Japan Polyethylene Corporation, Novatec HJ360 (MFR 5.5, melting point 132 °C)] and 40 parts by mass of ethylene-vinyl alcohol copolymer [manufactured by Kuraray Co., Ltd., EVAL F104B (MFR 4.4, melting point 183 °C)] were added to the hopper, each material was simultaneously extruded from a die outlet to obtain fiber with a conventional method, and the obtained fiber was cut to a length of 2 mm to prepare a hydrophilic short fiber including a core made of ethylene-vinyl alcohol copolymer and a coating layer made of polyethylene formed on the surface of the core.

*8 Sorbitan: sorbitan monostearate, manufactured by Kao Corporation, "RHEODOL AS-10V", number of hydroxyl groups: 3
*9 Sorbitol: manufactured by KANTO CHEMICAL CO.,INC., number of hydroxyl groups: 6
*10 Liquid polymer: with a polystyrene-equivalent weight-average molecular weight measured by gel permeation chromatography of 7000, liquid polybutadiene with a vinyl bond content of 50 % in the conjugated diene compound portion
*11 Age resistor: N-phenyl-N'-(1,3-dimethylbutyl)-p-phenylenediamine, manufactured by OUCHI SHINKO CHEMICAL INDUSTRIAL CO.,LTD., product name "NOCRAC 6C"

In Table 1, each of the examples and comparative example contained the same amount of resin, oil, stearic acid, and zinc white, in addition to the listed components.

The listed blending amount of the vulcanization accelerator is the total blending amount of a plurality of vulcanization accelerators.

According to the results of Table 1, it is understood that all of the rubber compositions of Examples achieved both wear resistance and on-ice performance at a high level. On the other hand, the rubber compositions of Comparative Examples had an inferior result in any of the evaluations to those of Examples, and it was difficult to achieve both excellent wear resistance and excellent on-ice performance for the rubber compositions of Comparative Examples.

INDUSTRIAL APPLICABILITY

According to the present disclosure, it is possible to provide a vulcanized rubber composition having good on-ice performance and excellent wear resistance. Further, according to the present disclosure, it is possible to provide a tire with excellent on-ice performance and wear resistance.

## Claims

1. A rubber composition, comprising a rubber component containing natural rubber, a cyclic polyol compound having a hydrocarbyl group, and a liquid polymer having a polystyrene-equivalent weight-average molecular weight of 5000 or more and less than 40000 measured by gel permeation chromatography,

wherein a content of the cyclic polyol compound having a hydrocarbyl group is 0.1 parts by mass to 5 parts by mass with respect to 100 parts by mass of the natural rubber, and
wherein a content of the liquid polymer is 1 part by mass to 40 parts by mass with respect to 100 parts by mass of the rubber component.

**2.** The rubber composition according to claim 1, wherein the cyclic polyol compound having a hydrocarbyl group is a cyclic polyol compound having a hydrocarbyl ester group.

**3.** The rubber composition according to claim 1, wherein the cyclic polyol compound having a hydrocarbyl group has two or more hydroxyl groups.

**4.** The rubber composition according to claim 1, wherein the cyclic polyol compound having a hydrocarbyl group is a compound represented by the following formula (1),

[Chem. 1]

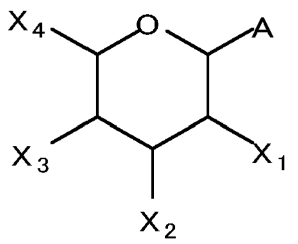

・・・(1)

where A is a hydrocarbyl ester group having 6 to 30 carbon atoms or a hydrocarbyl ether group having 6 to 30 carbon atoms, and $X_1$, $X_2$, $X_3$ and $X_4$ are each independently -OH or -R where -R is -H or $-CH_2OH$, provided that at least two of $X_1$, $X_2$, $X_3$ and $X_4$ are -OH.

**5.** The rubber composition according to claim 4, wherein the cyclic polyol compound having a hydrocarbyl group has 12 to 24 carbon atoms in the hydrocarbyl group indicated by A in the formula (1).

**6.** The rubber composition according to any one of claims 1 to 5, wherein the cyclic polyol compound having a hydrocarbyl group has a melting point of 40 °C to 100 °C.

**7.** The rubber composition according to any one of claims 1 to 6, wherein a content of the cyclic polyol compound having a hydrocarbyl group is 0.3 parts by mass to 2.5 parts by mass with respect to 100 parts by mass of the natural rubber.

**8.** The rubber composition according to any one of claims 1 to 7, wherein the liquid polymer is an unmodified conjugated diene-based polymer where a bound styrene content is less than 10 % and a vinyl bond content in a conjugated diene compound portion is 20 % or more.

**9.** The rubber composition according to claim 8, wherein a vinyl bond content in a conjugated diene compound portion of the liquid polymer is 70 % or less.

**10.** The rubber composition according to claim 9, wherein a vinyl bond content in a conjugated diene compound portion of the liquid polymer is 45 % or more and 55 % or less.

**11.** The rubber composition according to any one of claims 1 to 10, wherein the liquid polymer is unmodified polybutadiene.

**12.** The rubber composition according to any one of claims 1 to 11, further comprising a filler containing at least one selected from the group consisting of silica and carbon black.

**13.** The rubber composition according to any one of claims 1 to 12, wherein the rubber component further comprises a conjugated diene-based polymer having a functional group.

**14.** The rubber composition according to any one of claims 1 to 13, further comprising a pore introducing agent.

**15.** The vulcanized rubber composition according to claim 14, wherein the pore introducing agent is at least one selected from the group consisting of a foaming agent, a metal sulfate, a thermally expandable microcapsule, porous cellulose, and a lignin derivative.

**16.** The rubber composition according to any one of claims 1 to 15, further comprising a composite fiber.

**17.** A tire, using the rubber composition according to any one of claims 1 to 16 in a tread portion.

**18.** The tire according to claim 17, wherein the tire is a tire for passenger vehicles, a tire for trucks and buses, or a tire for light trucks.

## Patentansprüche

**1.** Kautschukzusammensetzung, umfassend eine Kautschukkomponente, die Naturkautschuk enthält, eine cyclische Polyolverbindung, die eine Hydrocarbylgruppe aufweist, und ein flüssiges Polymer, das ein Polystyrol-äquivalenten gewichtsmittleren Molekulargewicht von 5000 oder mehr und weniger als 40000, gemessen mittels Gelpermeationschromatographie,

wobei ein Gehalt der cyclischen Polyolverbindung, die eine Hydrocarbylgruppe aufweist, 0,1 bis 5 Masseteile bezogen auf 100 Masseteile Naturkautschuk beträgt und
wobei ein Gehalt des flüssigen Polymers 1 bis 40 Massenteile bezogen auf 100 Massenteile der Gummikomponente beträgt.

**2.** Kautschukzusammensetzung nach Anspruch 1, wobei es sich bei der cyclischen Polyolverbindung, die eine Hydrocarbylgruppe aufweist, um eine cyclische Polyolverbindung, die eine Hydrocarbylestergruppe aufweist, handelt.

**3.** Kautschukzusammensetzung nach Anspruch 1, wobei die cyclische Polyolverbindung, die einer Hydrocarbylgruppe aufweist, zwei oder mehr Hydroxylgruppen aufweist.

**4.** Kautschukzusammensetzung nach Anspruch 1, wobei es sich bei der cyclischen Polyolverbindung, die eine Hydrocarbylgruppe aufweist, um eine Verbindung der folgenden Formel (1) handelt,

[Chem. 1]

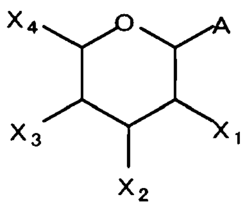

・・・(1)

wobei A eine Kohlenwasserstoffestergruppe, die 6 bis 30 Kohlenstoffatomen aufweist, oder eine Kohlenwasserstoffethergruppe, die 6 bis 30 Kohlenstoffatomen aufweist, ist und $X_1$, $X_2$, $X_3$ und $X_4$ jeweils unabhängig voneinander -OH oder -R sind, wobei -R -H oder $-CH_2OH$ ist, vorausgesetzt, dass mindestens zwei von $X_1$, $X_2$, $X_3$ und $X_4$ -OH sind.

**5.** Kautschukzusammensetzung nach Anspruch 4, wobei die cyclische Polyolverbindung, die eine Hydrocarbylgruppe aufweist, 12 bis 24 Kohlenstoffatome in der in der Formel (1) mit A bezeichneten Hydrocarbylgruppe aufweist.

**6.** Kautschukzusammensetzung nach einem der Ansprüche 1 bis 5, wobei die cyclische Polyolverbindung, die eine Hydrocarbylgruppe aufweist, einen Schmelzpunkt von 40 °C bis 100 °C aufweist.

**7.** Kautschukzusammensetzung nach einem der Ansprüche 1 bis 6, wobei ein Gehalt der cyclischen Polyolverbindung, die eine Hydrocarbylgruppe aufweist, 0,3 Masseteile bis 2,5 Masseteile bezogen auf 100 Masseteile Naturkautschuk beträgt.

8. Kautschukzusammensetzung nach einem der Ansprüche 1 bis 7, wobei es sich bei dem flüssigen Polymer um ein unmodifiziertes konjugiertes Dien-basiertes Polymer handelt, wobei ein Styrolbindungsgehalt weniger als 10 % und ein Vinybindungsgehalt 20 % oder mehr in einem konjugierten Dienverbindungsanteil beträgt.

9. Kautschukzusammensetzung nach Anspruch 8, wobei ein Vinylbindungsgehalt in einem konjugierten Dienverbindungsanteil des flüssigen Polymers 70 % oder weniger beträgt.

10. Kautschukzusammensetzung nach Anspruch 9, wobei ein Vinylbindungsgehalt in einem konjugierten Dienverbindungsanteil des flüssigen Polymers 45 % oder mehr und 55 % oder weniger beträgt.

11. Kautschukzusammensetzung nach einem der Ansprüche 1 bis 10, wobei es sich bei dem flüssigen Polymer um unmodifiziertes Polybutadien handelt.

12. Kautschukzusammensetzung nach einem der Ansprüche 1 bis 11, ferner umfassend einen Füllstoff, der mindestens eines, ausgewählt aus der Gruppe bestehend aus Siliciumdioxid und Ruß enthält.

13. Kautschukzusammensetzung nach einem der Ansprüche 1 bis 12, wobei die Kautschukkomponente ferner ein konjugiertes Dien-basiertes Polymer, die eine funktionellen Gruppe aufweist, umfasst.

14. Kautschukzusammensetzung nach einem der Ansprüche 1 bis 13, ferner umfassend ein Poreneinführungsmittel.

15. Vulkanisierte Kautschukzusammensetzung nach Anspruch 14, wobei das Poreneinführungsmittel mindestens eines ist, ausgewählt aus der Gruppe bestehend aus einem Treibmittel, einem Metallsulfat, einer thermisch expandierbaren Mikrokapsel, poröser Cellulose und einem Ligninderivat.

16. Kautschukzusammensetzung nach einem der Ansprüche 1 bis 15, ferner umfassend eine Verbundfaser.

17. Reifen, bei dem die Kautschukzusammensetzung nach einem der Ansprüche 1 bis 16 in einem Laufflächenabschnitt verwendet wird.

18. Reifen nach Anspruch 17, wobei es sich bei dem Reifen um einen Reifen für Personenkraftwagen, einen Reifen für Lastwagen und Busse oder einen Reifen für leichte Nutzfahrzeuge handelt.

## Revendications

1. Composition de caoutchouc, comprenant un composant en caoutchouc contenant du caoutchouc naturel, un composé polyol cyclique comportant un groupe hydrocarbyle et un polymère liquide présentant une masse moléculaire moyenne équivalent polystyrène de 5000 ou plus et inférieur à 40000 mesuré par chromatographie par perméation de gel,

   dans laquelle la teneur en composé polyol cyclique comportant un groupe hydrocarbyle est de 0,1 à 5 parties en masse par rapport à 100 parties en masse de caoutchouc naturel, et
   dans laquelle la teneur en polymère liquide est de 1 partie en masse à 40 parties en masse par rapport à 100 parties en masse du composant en caoutchouc.

2. Composition de caoutchouc selon la revendication 1, dans laquelle le composé de polyol cyclique comportant un groupe hydrocarbyle est un composé de polyol cyclique comportant un groupe ester hydrocarbyle.

3. Composition de caoutchouc selon la revendication 1, dans laquelle le composé polyol cyclique comportant un groupe hydrocarbyle possède deux groupes hydroxyle ou plus.

4. Composition de caoutchouc selon la revendication 1, dans laquelle le composé polyol cyclique comportant un groupe hydrocarbyle est un composé représenté par la formule (1) suivante,

[Formule chimique 1]

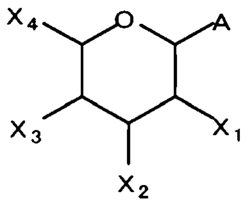

・・・(1)

dans laquelle A est un groupe ester hydrocarbyle comportant de 6 à 30 atomes de carbone ou un groupe éther hydrocarbyle comportant de 6 à 30 atomes de carbone, et $X_1$, $X_2$, $X_3$ et $X_4$ sont chacun indépendamment -OH ou -R, dans laquelle -R est -H ou $-CH_2OH$, à condition qu'au moins deux de $X_1$, $X_2$, $X_3$ et $X_4$ soient -OH.

5. Composition de caoutchouc selon la revendication 4, dans laquelle le composé de polyol cyclique comportant un groupe hydrocarbyle présente de 12 à 24 atomes de carbone dans le groupe hydrocarbyle indiqué par A dans la formule (1).

6. Composition de caoutchouc selon l'une quelconque des revendications 1 à 5, dans laquelle le composé polyol cyclique comportant un groupe hydrocarbyle présente un point de fusion de 40 °C à 100 °C.

7. Composition de caoutchouc selon l'une quelconque des revendications 1 à 6, dans laquelle la teneur en composé polyol cyclique comportant un groupe hydrocarbyle est de 0,3 partie en masse à 2,5 parties en masse par rapport à 100 parties en masse du caoutchouc naturel.

8. Composition de caoutchouc selon l'une quelconque des revendications 1 à 7, dans laquelle le polymère liquide est un polymère à base de diène conjugué non modifié, dont la teneur en styrène lié est inférieure à 10 % et une teneur en liaisons vinyle dans une portion de composé diène conjugué de 20 % ou plus.

9. Composition de caoutchouc selon la revendication 8, dans laquelle la teneur en liaisons vinyle dans une fraction de composé diène conjugué du polymère liquide est de 70 % ou moins.

10. Composition de caoutchouc selon la revendication 9, dans laquelle la teneur en liaisons vinyle dans une portion de composé diène conjugué du polymère liquide est de 45 % ou plus et de 55 % ou moins.

11. Composition de caoutchouc selon l'une quelconque des revendications 1 à 10, dans laquelle le polymère liquide est un polybutadiène non modifié.

12. Composition de résine selon l'une quelconque des revendications 1 à 11, comprenant en outre une charge contenant au moins un élément sélectionné dans le groupe consistant en silice et en noir de carbone.

13. Composition de caoutchouc selon l'une quelconque des revendications 1 à 12, dans laquelle le composant de caoutchouc comprend en outre un polymère à base de diène conjugué comportant un groupe fonctionnel.

14. Composition de caoutchouc selon l'une quelconque des revendications 1 à 13, comprenant en outre un agent d'introduction de pores.

15. Composition de caoutchouc vulcanisé selon la revendication 14, dans laquelle l'agent d'introduction de pores est au moins un agent choisi parmi le groupe constitué d'un agent moussant, d'un sulfate métallique, d'une microcapsule thermo-extensible, de cellulose poreuse et d'un dérivé de lignine.

16. Composition de caoutchouc selon l'une quelconque des revendications 1 à 15, comprenant en outre une fibre composite.

17. Pneumatique utilisant la composition de caoutchouc selon l'une quelconque des revendications 1 à 16 dans une bande de roulement.

18. Pneumatique selon la revendication 17, dans lequel le pneu est un pneu pour véhicules de tourisme, un pneu pour

camions et autobus, ou un pneu pour camions légers.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014172379 A
- EP 3456772 A1
- EP 3495162 A1
- JP 2001323095 A
- JP 2004115284 A
- JP 2016203842 A
- JP 2009196527 A
- JP 2000225815 A
- JP 2000264019 A
- JP 2003211921 A
- WO 2014196409 A
- JP 2012219245 A